# FASCICULE DE BREVET EUROPEEN

(11) **EP 4 508 312 B1**
(45) Date de publication et mention de la délivrance du brevet: **21.01.2026**
(21) Numéro de dépôt: 23725276.2
(22) Date de dépôt: 06.04.2023
(51) Int. Cl.: F01D 9/04, F01D 5/28, B64C 27/473, B64C 11/00, B64C 23/06, B64D 27/00

(54) **MOTEUR DE TURBOMACHINE À SOUFFLANTE NON CARÉNÉE**
TURBOMASCHINENTRIEBWERK MIT UNKANALISIERTEM FAN
TURBOMACHINE ENGINE WITH UNDUCTED FAN

(30) Priorité: 15.04.2022 FR 2203562
(43) Date de publication de la demande: 19.02.2025
(73) Titulaire: SAFRAN AIRCRAFT ENGINES, 75015 Paris (FR)
(72) Inventeur: LAUWICK, Lucas Antoine Christophe, 77550 MOISSY CRAMAYEL (FR); IGLESIAS CANO, Celia, 77550 MOISSY CRAMAYEL (FR)
(74) Mandataire: Casalonga
(86) Numéro de dépôt international: PCT/FR2023/050498
(87) Numéro de publication internationale: WO 2023/198979

(56) Documents cités:
- EP-A1- 0 466 602
- WO-A1-2014/076407
- FR-A1- 3 107 300
- US-A1- 2018 080 478
- US-A1- 2019 120 071

## Description

### Domaine technique de l'invention

La présente invention concerne le domaine des turbomachines, et notamment les redresseurs de flux ou aubages non tournants de compresseurs ou de turbine de turbomachine.

Plus particulièrement, l'invention concerne un moteur de turbomachine à soufflante non carénée comprenant une pluralité d'aubes fixes en matériaux composites.

Les aubes fixes de redresseur, notamment de sortie, sont dites « outlet guide vanes », d'acronyme OGV en termes anglo-saxons.

### Etat de la technique antérieure

Classiquement, on connait les turbomachines d'aéronef, du type turboréacteur à double flux et à double corps.

Le flux d'air principal est divisé en flux d'air primaire et en flux d'air secondaire par un organe de séparation ou bec ou nez séparateur d'air situé en aval de la soufflante. Le flux d'air primaire circule dans la veine primaire en pénétrant dans le compresseur basse pression au niveau d'aubes directrices d'entrée ou « inlet guide vanes », d'acronyme IGV en termes anglo-saxons. Le flux d'air secondaire est dévié par le bec séparateur dans la veine secondaire en direction des aubes directrices de sortie ou « outlet guide vanes », d'acronyme OGV en termes anglo-saxons, puis vers la sortir de la turbomachine. Le bec séparateur est disposé en amont des aubes OGV, sur l'extrémité amont de la plateforme interne de l'aubage OGV.

Dans le cas où le compresseur basse pression est assimilable à une soufflante, le flux principal est divisé en aval dudit compresseur basse pression et le flux d'air primaire circule dans la veine primaire en pénétrant dans le compresseur haute pression.

La séparation du flux d'air principal par le bec de séparation crée une perturbation des flux qui sont ensuite redressés par les aubes respectivement des aubes directrices d'entrée ou de sortie.

On connait les turbomachines à soufflantes carénées et les turbomachines à soufflantes non carénées dite « unducted fan » ou « open rotor » en termes anglo-saxons, dans lesquelles la soufflante n'est pas enveloppée d'un carénage extérieur aérodynamique.

Typiquement, les aubes fixes de redresseur comprennent chacune une pale et deux plateformes, respectivement interne et externe, rapportées sur ladite pale. La plateforme externe est ensuite fixée sur une structure fixe externe, telle qu'une virole de carter intermédiaire et la plateforme interne est fixée sur une structure fixe interne, telle qu'un moyeu de la turbomachine. Chacune des plateformes s'étend tangentiellement symétriquement de part et d'autre de la pale.

Dans le cas d'une turbomachine à soufflante non carénée, les aubes fixes de redresseur comprennent chacune une pale et une seule plateforme, interne, rapportée sur ladite pale, et fixée sur la structure fixe externe.

Il est connu d'utiliser des attaches radiales sous la forme d'une pluralité de brides radiales pour fixer chacune des portions tangentielles des plateformes sur une des structures fixes de la turbomachine. Toutefois, l'utilisation de brides radiales nécessite une surface de fixation importante au niveau de la plateforme des aubes fixes. En effet, afin d'avoir un moment quadratique satisfaisant et ainsi une meilleure reprise des efforts exercés sur l'aube, il est nécessaire que les zones de fixation de l'aube fixe sur la structure fixe soient éloignées de la pale de l'aube, dans une direction perpendiculaire à ladite pale.

Il est également connu d'utiliser une attache tangentielle pour fixer l'extrémité interne d'une aube fixe de redresseur dépourvue de plateforme. Dans ce cas, le stator comprend une pièce de fixation comprenant deux saillies radiales entre lesquelles s'étend l'extrémité interne d'une aube fixe. Toutefois, bien que l'encombrement tangentiel soit ici limité, l'encombrement radial d'une telle solution est particulièrement important, ce qui pénalise son intégration dans la turbomachine.

Dans les turbomachines récentes, les pièces aubagées de grandes dimensions sont généralement réalisées en matériaux composites à matrice organique permettant de réduire le poids des aubes tout en conservant des propriétés mécaniques équivalentes.

Il est connu de réaliser les pièces aubagées par tissage tridimensionnel d'une préforme unique densifiée.

La fixation des aubes fixes en matériaux composites sur des pièces métalliques du stator est réalisée par les systèmes d'attaches classiques, par deux brides radiales ou par une bride tangentielle.

Ainsi, il existe un besoin d'améliorer la fixation des aubes fixes en matériaux composites sur des pièces métalliques du stator en limitant à la fois l'encombrement radial et l'encombrement tangentiel.

On connait par ailleurs, de la demande de brevet français FR 3 107 300 A1, un moteur de turbomachine à soufflante non carénée comprenant une pluralité d'aubes fixes, chacune des aubes étant destinées à être fixée uniquement sur une structure fixe interne d'une turbomachine, ladite aube fixe comprenant une pale aérodynamique s'étendant radialement vers l'extérieur selon un axe radial, une extrémité radiale externe et une extrémité radiale interne.

### Exposé de l'invention

La présente invention a donc pour but de palier les inconvénients précités.

L'objectif de l'invention est donc de réduire l'encombrement tangentiel d'une zone de fixation d'une aube fixe de redresseur en matériaux composites.

L'invention a donc pour objet un moteur de turbomachine à soufflante non carénée, tel que défini par la revendication 1.

Par exemple, la première direction tangentielle est perpendiculaire à l'axe radial de la pale aérodynamique.

En d'autres termes, la plateforme interne ne s'étend latéralement par rapport à la pale que d'un côté de ladite pale et ne s'étend pas au-delà la pale de l'autre côté de ladite pale.

Les termes « interne » et « externe » sont définis par rapport à une direction radiale à l'axe de rotation de la turbomachine, l'intérieur étant plus proche de l'axe de rotation que l'extérieur.

Par « coude » ou « cornière », on entend une partie courbée de jonction entre la plateforme interne ou externe correspondante et l'extrémité radiale interne ou externe correspondante.

Selon un mode de réalisation avantageux, la pale aérodynamique et la plateforme interne sont réalisées en une seule pièce monobloc.

Selon un mode de réalisation avantageux, l'épaisseur du coude de raccordement interne et/ou de la plateforme interne est plus importante que l'épaisseur de la pale aérodynamique.

En variante, l'épaisseur du coude de raccordement interne et/ou de la plateforme interne est moins importante que l'épaisseur de la pale.

Selon un mode de réalisation, la plateforme interne comprend un renfort tissé dans une armure différente de l'armure de la pale aérodynamique.

### Brève description des dessins

D'autres buts, caractéristiques et avantages de l'invention apparaîtront à la lecture de la description suivante, donnée uniquement à titre d'exemple non limitatif, et faite en référence au dessin indexé sur lequel :

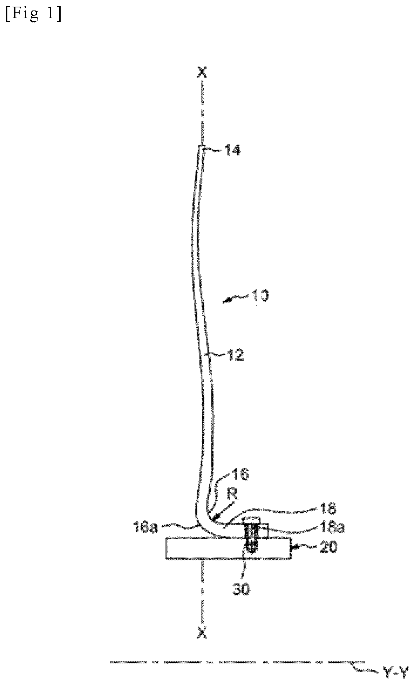

[Fig 1] illustre schématiquement une aube fixe en matériaux composites selon un mode de réalisation de l'invention, vue selon la direction axiale, correspondant à la direction de circulation des fluides dans la turbomachine, fixée sur une structure fixe interne d'une turbomachine à soufflante non carénée.

Dans la suite de la description, les termes « amont » et « aval » sont définis par rapport au sens de circulation de l'air dans la turbomachine. Les termes « interne » et « externe » sont définis par rapport à une direction radiale à l'axe de rotation Y-Y de la turbomachine, l'intérieur étant plus proche de l'axe de rotation Y-Y que l'extérieur.

### Exposé détaillé d'au moins un mode de réalisation

Sur la figure 1 est représentée très schématiquement une vue d'une aube fixe 10 de redresseur réalisée en matériaux composites fixée sur une structure fixe interne 20, par exemple une pièce métallique d'un moyeu d'une turbomachine (non représentée) à soufflante non carénée, et notamment un turboréacteur d'aéronef. La turbomachine ne sera pas détaillée dans la suite de la description.

L'aube fixe 10 comprend une pale aérodynamique 12 s'étendant radialement vers l'extérieur selon un axe radial X-X, une extrémité radiale externe ou tête d'aube 14 et une extrémité radiale interne 16 ou pied d'aube.

L'aube fixe 10 comprend en outre une plateforme interne 18 raccordée au pied d'aube 16 par un coude ou cornière de raccordement interne 16a.

Tel qu'illustré sur la figure 1, la plateforme interne 18 s'étend ici tangentiellement à partir du pied d'aube 16 selon une seule première direction tangentielle, ici perpendiculaire à l'axe radial X-X de la pale aérodynamique 12. En d'autres termes, la plateforme interne 18 ne s'étend que d'un côté de ladite pale.

De manière générale, la plateforme interne 18 s'étend tangentiellement à partir du pied d'aube 16 selon une seule première direction tangentielle sécante à l'axe radial X-X de la pale aérodynamique 12.

L'aube illustrée sur la figure 1 présente une forme générale en L.

La pale aérodynamique 12 et la plateforme interne 18 sont réalisées en une seule pièce monobloc.

La plateforme interne 18 comprend un perçage 18a de réception d'un système de fixation radiale 30, ici un boulon. En variante, on pourrait prévoir un autre type de système de fixation, par exemple un rivet.

Selon l'invention, un organe de renfort est disposé radialement entre la plateforme interne 18 de chacune des aubes fixes 10 et la structure fixe interne 20.

On pourrait avantageusement prévoir d'insérer en tant qu'organe de renfort, une plaque de renfort disposée radialement entre la plateforme interne 18 et la pièce métallique 20.

L'aube fixe 10 est, par exemple, réalisée par tissage tridimensionnel d'une préforme unique densifiée.

On pourrait prévoir une épaisseur du coude de raccordement interne 16a au niveau de son rayon de courbure R plus importante que l'épaisseur de la pale 12.

On pourrait également prévoir une épaisseur de la plateforme interne 18 plus importante que l'épaisseur de la pale 12.

On pourrait également prévoir que la plateforme interne 18 et éventuellement la zone de raccordement 16a à la pale 12 comprennent un renfort textile (non représenté) tissé dans une armure différente de l'armure de la pale, notamment plus raide.

Grace à l'invention, l'encombrement tangentiel de la zone de fixation de l'aube fixe sur les structures fixes de la turbomachine est considérablement réduit. Par ailleurs, le procédé de fabrication de l'aube fixe en matériaux composites est également simplifié par la suppression d'une des plateformes latérales et ainsi de la simplification de l'armure de tissage dans la zone de fixation.

Des avantages sont également notables au moment de la préparation de la préforme tissée et de sa mise en forme dans le moule d'injection.

## Revendications

1. Moteur de turbomachine à soufflante non carénée comprenant une pluralité d'aubes fixes (10) en matériaux composites, chacune des aubes fixes étant destinée à être fixée uniquement sur une structure fixe interne (20) d'une turbomachine, ladite aube fixe (10) comprenant une pale aérodynamique (12) s'étendant radialement vers l'extérieur selon un axe radial (X-X), une extrémité radiale externe (14) et une extrémité radiale interne (16), une plateforme interne (18) configurée pour se fixer sur la structure fixe interne (20) et raccordée à l'extrémité radiale interne (16) par un coude de raccordement interne (16a) et s'étendant à partir de ladite extrémité radiale interne (16) selon une seule première direction tangentielle, sécante à l'axe radial (X-X) de la pale aérodynamique (12), ladite plateforme interne (18) comprenant un orifice (18a) de réception d'un système de fixation radiale (30) pour la fixation indépendante de chacune des aubes fixes sur la structure fixe interne (20), **caractérisé en ce qu'**il comprend un organe de renfort disposé radialement entre la plateforme interne (18) de chacune des aubes fixes (10) et la structure fixe interne (20).

2. Moteur selon la revendication 1, dans lequel la pale aérodynamique (12) et la plateforme interne (18) sont réalisées en une seule pièce monobloc.

3. Moteur selon la revendication 1 ou 2, dans lequel l'épaisseur du coude de raccordement interne (16a) et/ou de la plateforme interne (18) est plus importante que l'épaisseur de la pale aérodynamique (12).

4. Moteur selon l'une quelconque des revendications précédentes, dans lequel la plateforme interne (18) comprend un renfort tissé dans une armure différente de l'armure de la pale aérodynamique (12).

## Patentansprüche

1. Turbomaschinenmotor mit einem nicht verkleideten Gebläse, der eine Vielzahl von feststehenden Schaufeln (10) aus Verbundwerkstoffen umfasst, wobei jede der feststehenden Schaufeln dazu bestimmt ist, nur an einer feststehenden inneren Struktur (20) einer Turbomaschine befestigt zu werden, wobei die feststehende Schaufel (10) ein aerodynamisches Schaufelblatt (12), das sich radial nach außen entlang einer Radialachse (X-X), ein äußeres radiales Ende (14) und ein inneres radiales Ende (16) und eine innere Plattform (18) umfasst, die so konfiguriert ist, dass sie an der feststehenden inneren Struktur (20) befestigt werden kann, und die mit dem inneren radialen Ende (16) durch einen inneren Verbindungsbogen (16a) verbunden ist und sich von dem inneren radialen Ende (16) in einer einzigen ersten tangentialen Richtung erstreckt, die die Radialachse (X-X) des aerodynamischen Schaufelblatts (12) schneidet, wobei die innere Plattform (18) eine Öffnung (18a) zu der Aufnahme eines radialen Befestigungssystems (30) zum unabhängigen Befestigen jeder der feststehenden Schaufeln an der feststehenden inneren Struktur (20) umfasst, **dadurch gekennzeichnet, dass** es ein Versteifungselement umfasst, das radial zwischen der inneren Plattform (18) jeder der feststehenden Schaufeln (10) und der feststehenden inneren Struktur (20) angeordnet ist.

2. Motor nach Anspruch 1, wobei das aerodynamische Schaufelblatt (12) und die innere Plattform (18) aus einem Stück gefertigt sind.

3. Motor nach Anspruch 1 oder 2, wobei die Dicke des inneren Verbindungsbogens (16a) und/oder der inneren Plattform (18) größer ist als die Dicke des aerodynamischen Schaufelblatts (12).

4. Motor nach einem der vorhergehenden Ansprüche, wobei die innere Plattform (18) eine Versteifung umfasst, die in einer anderen Webart als die Webart des aerodynamischen Schaufelblatts (12) gewebt ist.

## Claims

1. Turbomachine engine with unducted fan comprising a plurality of fixed vanes (10) made of composite materials, each of the fixed vanes being intended to be attached solely to an inner fixed structure (20) of a turbomachine, said fixed vane (10) comprising an aerodynamic blade (12) extending radially outward along a radial axis (X-X), an outer radial end (14) and an inner radial end (16), an inner platform (18) configured to attach to the inner fixed structure (20) and connected to the inner radial end (16) by an inner connecting elbow (16a) and extending from said inner radial end (16) in a single first tangential direction, intersecting the radial axis (X-X) of the aerodynamic blade (12), said inner platform (18) comprising an orifice (18a) for receiving a radial attachment system (30) for independently securing each of the fixed vanes to the inner fixed structure (20), **characterised in that** it comprises a reinforcement member arranged radially between the inner platform (18) of each of the fixed vanes (10) and the inner fixed structure (20).

2. Engine according to Claim 1, wherein the aerodynamic blade (12) and the inner platform (18) are made from a single one-piece component.

3. Engine according to Claim 1 or 2, wherein the thickness of the inner connecting elbow (16a) and/or the inner platform (18) is greater than the thickness of the aerodynamic blade (12).

4. Engine according to one of the preceding claims, wherein the inner platform (18) comprises a reinforcement woven in a different weave from that of the aerodynamic blade (12).
